# EUROPÄISCHE PATENTANMELDUNG

(11) **EP 1 085 360 A1**
(43) Veröffentlichungstag der Anmeldung: **21.03.2001**
(21) Anmeldenummer: 99118190.0
(22) Anmeldetag: 13.09.1999
(51) Int. Cl.: G02B 6/44, H02G 9/06

(54) **Knickschutzvorrichtung für Leitungen**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Tresch, Rudolf, 5703 Seon (CH)
(74) Vertreter: Patentanwälte Schaad, Balass, Menzl & Partner AG

(57) **Zusammenfassung**

Die Schutzvorrichtung, die insbesondere in Kanalisationsanlagen für die Verlegung von Leitungen (15), insbesondere Lichtwellenleiterkabeln, verwendbar ist, weist ein mittels einer Halterung (2) montierbares Umlenkelement (1) auf, durch das aus einer ersten Richtung kommende Leitungen (15) in eine zweite Richtung umlenkbar sind. Die Halterung (2) umfasst ein erstes Winkelelement (4), das in einer ersten Ebene einen wählbaren Winkel einschliessend, mit einer an einer Auflagefläche montierbaren Grundplatte (3) und in einer zur ersten Ebene zumindest annähernd senkrecht stehenden zweiten Ebene, wiederum einen wählbaren Winkel einschliessend, mit einem zweiten Winkelelement (5) verbindbar ist, an dem das Umlenkelement (1) befestigt ist. Die Halterung (2) kann daher einfach montiert werden, wonach das Umlenkelement (1) bequem in die gewünschte Lage ausgerichtet und fixiert werden kann.

## Beschreibung

Die vorliegende Erfindung betrifft eine beispielsweise in Entwässerungsanlagen zur Führung und Umlenkung von Leitungen und Kabeln, insbesondere Lichtwellenleiterkabeln, dienende Schutzvorrichtung gemäss dem Oberbegriff des Anspruchs 1.

Aus der DE-U1-298 02 655 ist eine Schutzvorrichtung dieser Art bekannt, die für den Einsatz im Übergangsbereich zwischen einem Einstiegsschacht und einem in diesen mündenden Entwässerungsrohr einer Entwässerungs- bzw. Kanalisationsanlage vorgesehen ist. Sie weist ein Umlenkelement auf, das in einer Ebene halbkreisförmig, insbesondere als halbe Tropfenform ausgebildet ist, und auf seiner radial aussenliegenden Seite eine Nut zur Aufnahme eines Lichtwellenleiters aufweist. Eine einstückige Abdeck-, Halte- und Befestigungsvorrichtung deckt einerseits die Nut ab und dient andererseits zum Halten und Befestigen des Umlenkelements an der Wand des Einstiegsschachts. Das Umlenkelement ist von der Mündung des Entwässerungsrohres in den Einstiegsschacht schräg nach oben verlaufend angeordnet und das im Entwässerungsrohr verlegte Lichtwellenleiterkabel verläuft im Einstiegsschacht in der Nut des Umlenkelements und vom dem Entwässerungsrohr abgewandten Ende des Umlenkelements etwa geradlinig zu Haken, die an der Wand des Einstiegsschachts befestigt sind. Durch die Haken ist das Lichtwellenleiterkabel in Umfangsrichtung des Einstiegsschachts zu einem nächsten Umlenkelement geführt, über welches das Lichtwellenleiterkabel in ein weiteres Entwässerungsrohr verläuft.

Die bekannte Schutzvorrichtung wird daher in einer Position fest montiert, die es erlaubt, das Lichtwellenleiterkabel in eine vorgesehene Richtung weiter zu führen. Sofern sich herausstellt, dass die ursprünglich vorgesehene Richtung nicht korrekt war, die Schutzvorrichtung nicht genügend präzise montiert wurde oder mangels einer passenden Auflagefläche gar nicht in der gewünschten Position montiert werden konnte, sind die Haken im Einstiegsschacht entsprechend anzupassen, damit keine unzulässige Biegung des Lichtwellenleiterkabels entsteht. Selbstverständlich ist auch die Biegung des Lichtwellenleiterkabels im Entwässerungsrohr zu beachten und gegebenenfalls zu korrigieren. Sofern nicht optimale Bedingungen vorliegen, können sich diese Montagearbeiten daher sehr aufwendig gestalten.

Es ist deshalb eine Aufgabe der vorliegenden Erfindung, eine einfach montierbare Schutzvorrichtung zu schaffen, die ein knickfreies Führen und Umlenken von Leitungen und Kabeln, insbesondere Lichtwellenleiterkabeln, ermöglicht.

Diese Aufgabe wird mit einer Schutzvorrichtung gelöst, die die Merkmale des Anspruchs 1 aufweist.

Bevorzugte Ausgestaltungen der Schutzvorrichtung sind in weiteren Ansprüchen angegeben.

Die erfindungsgemässe Schutzvorrichtung besteht aus einem Umlenkelement und einer Halterung, die ein erstes Winkelelement aufweist, das in einer ersten Ebene einen wählbaren Winkel einschliessend, mit einer an einer Auflagefläche, z.B. an einer Kanal- oder Schachtwand montierbaren Grundplatte und in einer zur ersten Ebene zumindest annähernd senkrecht stehenden zweiten Ebene, wiederum einen wählbaren Winkel einschliessend, mit einem zweiten Winkelelement verbindbar ist, an dem das Umlenkelement befestigt ist.

Nach der Montage der Grundplatte kann das Umlenkelement daher durch Drehen und Kippen der beiden Winkelelemente in eine passende Lage gebracht und dort fixiert werden. Sofern notwendig, z.B. bei der Verlegung eines zusätzlichen Kabels, können die Winkelelemente gelöst und in einer korrigierten Position wieder fixiert werden. Die Ausrichtung des Umlenkelementes kann daher nach der Montage der Grundplatte bequem vollzogen bzw. korrigiert werden.

Die Erfindung wird anhand eines in der Zeichnung dargestellten Ausführungsbeispiels näher erläutert. Es zeigen rein schematisch:
- Fig. 1: eine vorzugsweise Ausgestaltung der erfindungsgemässen Schutzvorrichtung mit Umlenkelement 1 und Halterung 2,
- Fig. 2: die Halterung 2 gemäss Fig. 1 mit einer Grundplatte 2, einem ersten und einem zweiten Winkelelement 4 und 5, die gegeneinander in die Endlagen gedreht sind und
- Fig. 3: die Halterung 2 gemäss Fig. 2 in Mittelstellung.

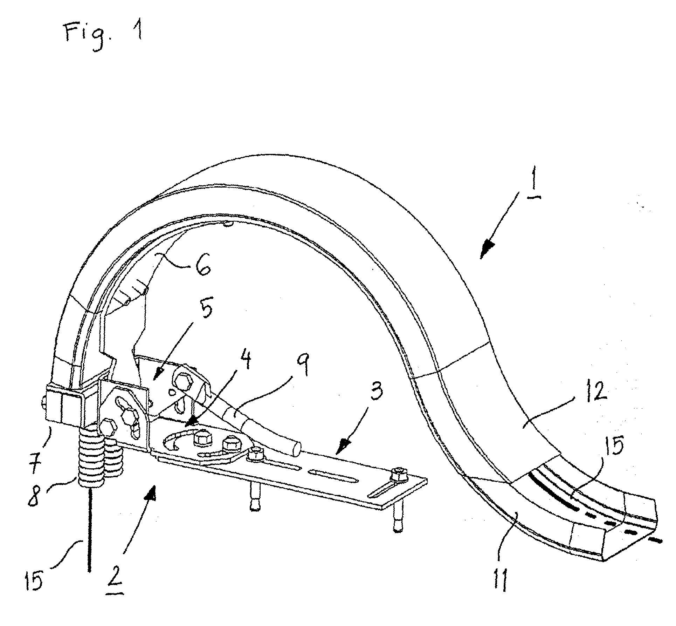

Fig. 1 zeigt eine Schutzvorrichtung insbesondere für in Kanalisationsanlagen zu verlegenden Leitungen 15, mit einem mittels einer Halterung 2 montierbaren Umlenkelement 1, durch das aus einer ersten Richtung kommende Leitungen 15 in eine zweite Richtung umlenkbar sind.

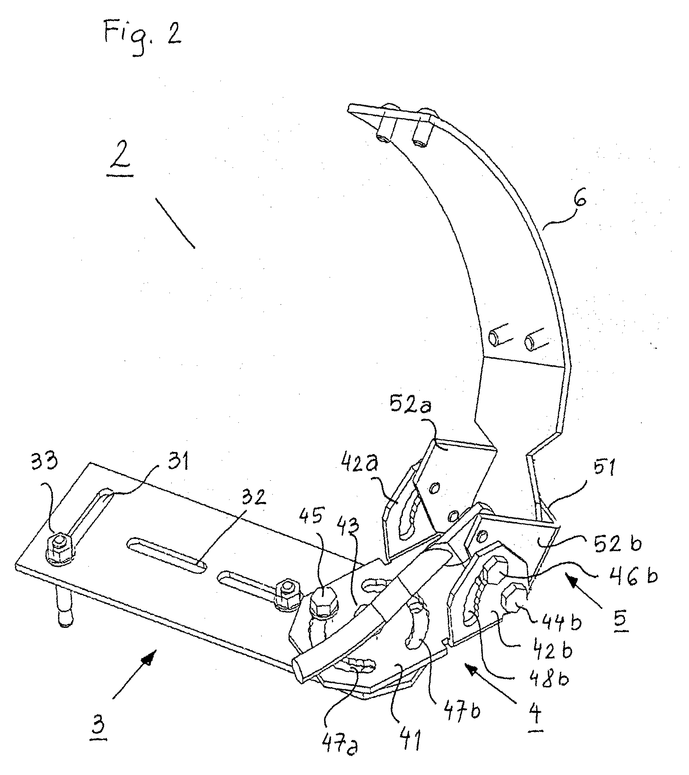

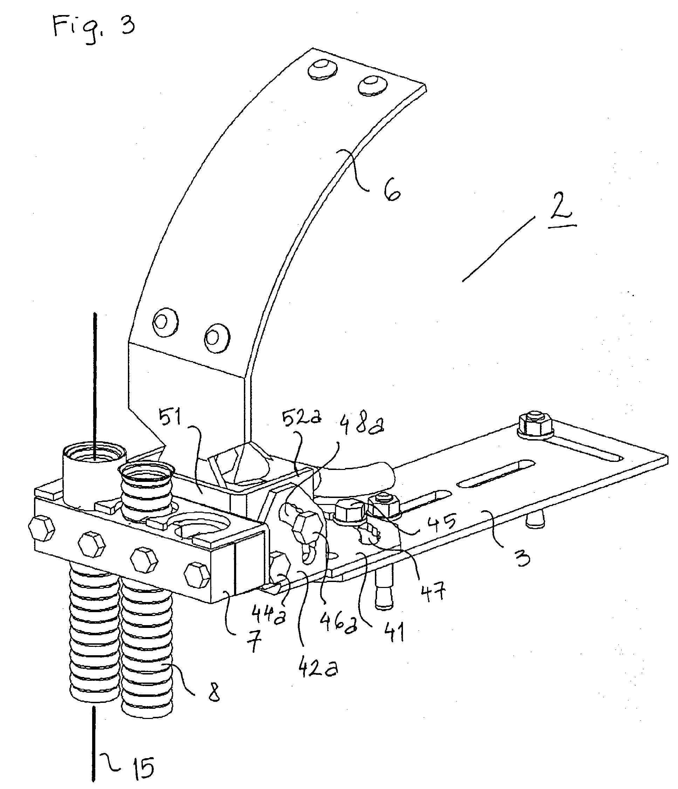

Die Halterung 2, die in Fig. 2 und Fig. 3 ohne Umlenkelement 1 gezeigt ist, weist eine auf einer Auflagefläche, z.B. an einer Kanal- oder Schachtwand montierbare Grundplatte 3 sowie zwei Winkelelemente 4, 5 auf, die es erlauben, das Umlenkelement 1 in eine passende Lage zu drehen und zu kippen. Die mit dem ersten Winkelelement 4 verbundene Grundplatte 3 ist vorzugsweise mit zur Durchführung von Montageschrauben 33 dienenden Schlitzen 31, 32 versehen, die es erlauben, die Grundplatte 3 und somit das Umlenkelement 1 vor dem Anziehen der Montageschrauben 33 in eine günstigere Position zu verschieben oder zu drehen.

Das erste und das zweite Winkelelement 4, 5 weisen eine Basisplatte 41; 51 und zwei Flügelstücke 42a, 42b bzw. 52a, 52b auf, die zusammen mit der zugehörigen Basisplatte 41; 51 ein L-Profil bzw. ein U-Profil bilden. Die Flügelstücke 42a, 42b und 52a, 52b sind miteinander verschraubt, so dass die ineinander verschobenen Winkelelemente 4 und 5, einen vorgesehenen Winkel einschliessend, miteinander fest verbunden sind.

Die Grundplatte 3 und die Basisplatte 41 des ersten Winkelelements 4 sind durch eine erste Schraube 43 miteinander verbunden, die eine Achse bildet, um die die beiden Platten 3, 41 gegeneinander drehbar und durch wenigstens eine weitere Schraube 45 gegenseitig fixierbar sind. In der Basisplatte 41 ist ein Durchlass, z.B. eine Bohrung, zur Durchführung der ersten Schraube 43 sowie ein konzentrisch dazu verlaufender Schlitz 47a vorgesehen, innerhalb dem die zur Fixierung dienende weitere Schraube 45 bei einer gegenseitigen Verdrehung der beiden Platten 3, 41 geführt ist. Gezeigt ist ein weiterer Schlitz 47b, durch den eine zusätzliche Befestigungsschraube führbar und, wie die erste und zweite Schraube 43 bzw. 45, in eine in der Grundplatte 3 vorgesehene Gewindebohrung eindrehbar ist. Die Grundplatte 3 und die Basisplatte 41 können daher um einen durch die Länge der konzentrisch verlaufenden Schlitze 47a, 47b bestimmten Winkel in einer ersten Ebene gegeneinander gedreht und in einer gewünschten Lage fixiert werden.

In ähnlicher Weise sind die beiden Winkelelemente 4 und 5 in einer zur ersten Ebene vorzugsweise senkrechten zweiten Ebene gegeneinander verschiebbar und fixierbar. Das Umlenkelement 1 kann daher in der ersten Ebene verschoben und gedreht sowie gegen diese erste Ebene gekippt bzw. geneigt werden (Drehung in der zweiten Ebene). Die Flügelstücke 42a; 42b bzw. 52a; 52b sind dazu je mit einer Schraube 44a; 44b miteinander verbunden, die eine Achse bildet, um die die beiden Winkelelemente 4, 5 gegeneinander drehbar und durch wenigstens eine weitere Schraube 46a; 46b gegenseitig fixierbar sind.

In den Flügelstücken 42a; 42b des ersten Winkelelements 4 ist je eine Bohrung zur Durchführung einer ersten Schraube 44a; 44b sowie je ein konzentrisch dazu verlaufender Schlitz 48a; 48b vorgesehen, innerhalb dem die zur Fixierung dienende weitere Schraube 46a; 46b bei einer gegenseitigen Verdrehung der beiden Winkelelemente 4, 5 geführt ist. Die Schrauben 44a; 44b und 46a; 46b, die durch Bohrungen und Schlitze 48a; 48b in den Flügelstücken 42a; 42b des ersten Winkelelements 4 geführt sind, sind in dazu korrespondierende Gewindebohrungen in den Flügelstücken 52a; 52b des zweiten Winkelelements 5 eingedreht. Die beiden Winkelelemente 4 und 5 können daher um einen durch die Länge der konzentrisch verlaufenden Schlitze 48a, 48b bestimmten Winkel in der zweiten Ebene gegeneinander gedreht und in einer gewünschten Lage fixiert werden. In Fig. 1 und Fig. 2 ist gezeigt, dass die Flügelstücke 42a, 42b des ersten Winkelelements 4 die Flügelstücke 52a, 52b des zweiten Winkelelements 5 von aussen umfassen. Selbstverständlich können die beschriebenen Massnahmen zur Verbindung der beiden Winkelelemente 4, 5 auch ausgetauscht werden (Flügelstücke 42a, 42b z.B. innenliegend).

Das Umlenkelement 1 kann nun direkt oder, wie in Fig. 1 und 2 gezeigt, über einen Stützbügel 6 mit dem zweiten Winkelelement 5 verbunden werden. Das zweite Winkelelement 5 kann in einer Verlängerung auch entsprechend der Gestalt des Stützbügels 6 geformt werden. Der Stützbügel 6 verfügt vorzugsweise über eine gewisse Elastizität, die verhindert, dass ruckartige Zugkräfte insbesondere im Bereich der Biegezonen zu Verformungen an den Leitungen 15 führen können.

Vorzugsweise ist das zweite Winkelelement 5, wie in Fig. 3 gezeigt, mit einem Montageblock 7 verbunden, an dem die Leitungen 15 oder für die Leitungen 15 vorgesehene Führungsrohre 8 befestigbar sind. Der Montageblock 7 bietet dabei einen geschützten Zugang zum Umlenkelement 1. Die Leitungen 15 können durch den Montageblock 7 auch gehalten werden, so dass Zugbewegungen durch die Halterung 2 und nicht durch die umgelenkte Leitung 15 aufgefangen werden.

Das Umlenkelement 1 weist ein inneres Führungselement 11 auf, in dem eine aus einer ersten Richtung kommende Leitung 15 in eine zweite Richtung umgelenkt wird. Vorzugsweise weist das Umlenkelement 1 zusätzlich eine Abdeckung 12 auf, welche zusammen mit dem inneren Führungselement 11 einen Kabelkanal bildet, innerhalb dem umgelenkte Leitungen 15 geschützt verlaufen.

Das innere Führungselement 11 und das dazu korrespondierende äussere Führungselement 12 weisen vorzugsweise einen tropfenförmigen Verlauf auf. Nach jeweiligen Bedürfnissen können auch andere Verläufe gewählt werden. Selbstverständlich kann die erfindungsgemässe Schutzvorrichtung für beliebige elektrische oder optische Leitungen 15 aber auch für Flüssigkeitsleitungen verwendet werden.

Da über längere Distanzen störende Potentialdifferenzen auftreten können, werden benachbarte Halterungen 2 vorzugsweise mit einem elektrischen Kabel 9 verbunden durch das ein Potentialausgleich erfolgt. Durch Potentialdifferenzen verursachte Datenübertragungsfehler, deren Ursache normalerweise kaum feststellbar ist, können dadurch vermieden werden.

Die Halterung 2 und das Umlenkelement 1 werden vorzugsweise aus korrosionsbeständigen Materialien hergestellt. Geeignet sind z.B. Kunststoffe, die die notwendige Festigkeit aufweisen, rostfreier Stahl oder verzinkte Metalle.

Zur gegenseitigen Fixierung der Grundplatte 3 und der Winkelelemente 4, 5 und somit des Umlenkelementes 1 sind, wie oben beschrieben, Schrauben 45, 46a und 46b vorgesehen. Möglich ist jedoch auch, das Umlenkelement 1 direkt mit einer Schraube zu fixieren, die vorzugsweise an dem von der Halterung 2 entfernten Ende des Umlenkelementes 1 z.B. durch einen Flansch in die Auflagefläche, z.B. eine Kanalwand, eingeschraubt wird.

## Patentansprüche

1. Schutzvorrichtung insbesondere für in Kanalisationsanlagen zu verlegende Leitungen (15), mit einem mittels einer Halterung (2) montierbaren Umlenkelement (1), durch das aus einer ersten Richtung kommende Leitungen (15) in eine zweite Richtung umlenkbar sind, **dadurch gekennzeichnet,** dass die Halterung (2) ein erstes Winkelelement (4) aufweist, das um eine erste Achse drehbar, mit einer an einer Auflagefläche montierbaren Grundplatte (3) und, um eine zweite Achse drehbar, mit einem zweiten Winkelelement (5), an dem das Umlenkelement (1) befestigt ist, verbunden und fixierbar ist.

2. Schutzvorrichtung nach Anspruch 1, dadurch gekennzeichnet, dass das erste und/oder das zweite Winkelelement (4; 5) eine Basisplatte (41; 51) und ein oder zwei Flügelstücke (42a; 42b bzw. 52a; 52b) aufweisen, die zusammen mit der Basisplatte (41; 51) ein L-Profil bzw. ein U-Profil bilden, wobei die Flügelstücke (42a; 42b bzw. 52a; 52b) des ersten und des zweiten Winkelelements (4; 5), einen wählbaren Winkel einschliessend, miteinander verbindbar sind.

3. Schutzvorrichtung nach Anspruch 1 oder 2, dadurch gekennzeichnet, dass die Grundplatte (3) und die Basisplatte (41) des ersten Winkelelements (4) um eine die erste Achse bildende Schraube (43) sowie die Flügelstücke (42a; 42b bzw. 52a; 52b) des ersten und des zweiten Winkelelements (4; 5) um wenigstens eine die zweite Achse bildende Schraube (44a; 44b) gegenseitig drehbar sind, wobei die erste und die zweite Achse vorzugsweise senkrecht zu einander verlaufen.

4. Schutzvorrichtung nach einem der Ansprüche 1, 2 oder 3, dadurch gekennzeichnet, dass das zweite Winkelelement (5) direkt oder über einen elastischen oder festen Stützbügel (6) mit dem Umlenkelement (1) verbunden ist.

5. Schutzvorrichtung nach einem der Ansprüche 1 bis 4, dadurch gekennzeichnet, dass das zweite Winkelelement (5) mit einem Montageblock (7) verbunden ist, an dem die Leitungen (15) oder für die Leitungen (15) vorgesehene Führungsrohre (8) befestigbar sind.

6. Schutzvorrichtung nach einem der Ansprüche 1 bis 5, dadurch gekennzeichnet, dass das Umlenkelement (1) ein zur Aufnahme der Leitungen (15) dienendes, vorzugsweise einen tropfenförmigen Verlauf aufweisendes Führungselement (11) umfasst.

7. Schutzvorrichtung nach Anspruch 6, dadurch gekennzeichnet, dass das nach aussen geöffnete Führungselement (11) durch eine Abdeckung (12) derart abschliessbar ist, dass durch das Umlenkelement (1) ein Kabelkanal für die Leitungen (15) gebildet wird.

8. Schutzvorrichtung nach einem der Ansprüche 1 bis 7, dadurch gekennzeichnet, dass das erste und das zweite Winkelelement (4; 5) und die Basisplatte (41; 51) und/oder das Umlenkelement (1) durch wenigstens eine weitere Schraube (45 bzw. 46a; 46b) fixierbar sind.

9. Schutzvorrichtung nach einem der Ansprüche 1 bis 8, dadurch gekennzeichnet, dass das erste Winkelelement (4) in der Basisplatte (41) sowie im Flügelstück (42 bzw. 42a, 42b) ein Durchlass zur Durchführung der ersten bzw. der zweiten Schraube (43 bzw. 44a; 44b) sowie konzentrisch dazu je wenigstens einen Schlitz (47a; 47b bzw. 48a; 48b) aufweist, der von den zur Fixierung der Vorrichtung dienenden weiteren Schrauben (45 bzw. 46a; 46b) durchgriffen ist.

10. Schutzvorrichtung nach einem der Ansprüche 1 bis 9, dadurch gekennzeichnet, dass die Grundplatte (3) mit vorzugsweise in Längsrichtung und quer dazu verlaufenden Schlitzen (31; 32) versehen ist, die zur Durchführung von Montageschrauben (33) dienen.

11. Schutzvorrichtung nach einem der Ansprüche 1 bis 10, dadurch gekennzeichnet, dass ein Kabel (9) an die Halterung (2) anschliessbar bzw. angeschlossen ist, durch das wenigstens zwei Schutzvorrichtungen zum Zweck des Potentialausgleichs miteinander verbindbar sind.

12. Schutzvorrichtung nach einem der Ansprüche 1 bis 11, dadurch gekennzeichnet, dass die Halterung (2) und/oder das Umlenkelement (1) zumindest teilweise aus einem korrosionsbeständigen Material, wie Kunststoff oder rostfreier Stahl, gefertigt sind.
